# EUROPÄISCHE PATENTSCHRIFT

(11) **EP 2 833 430 B1**
(45) Veröffentlichungstag und Bekanntmachung des Hinweises auf die Patenterteilung: **09.09.2015**
(21) Anmeldenummer: 13178773.1
(22) Anmeldetag: 31.07.2013
(51) Int. Cl.: H01M 2/02

(54) **Gehäuse für ein Batteriesystem**
Housing for a battery system
Boîtier pour un système de batterie

(43) Veröffentlichungstag der Anmeldung: 04.02.2015
(73) Patentinhaber: Samsung SDI Battery Systems GmbH, 8141 Zettling (AT)
(72) Erfinder: Kojc, Miran, 2000 Maribor (SI); Pucher, Matthias, 8052 Graz (AT); Wünsche, Ralph, 8010 Graz (AT)
(74) Vertreter: Gulde & Partner

(56) Entgegenhaltungen:
- JP-A- 2001 283 793
- US-A1- 2006 141 354
- US-A1- 2007 285 051
- US-B1- 6 197 444

## Beschreibung

### Gebiet der Erfindung

Die vorliegende Erfindung betrifft ein Batteriesystem, umfassend ein Batteriegehäuse mit zumindest zwei Batteriegehäuseschalen und zumindest eine Batteriekomponente.

### Stand der Technik

Üblicherweise verwendete Batteriegehäuse bestehen aus einem Oberteil und einem Unterteil und sind meist aus einem nicht leitenden Material hergestellt, in der Regel ist dies Kunststoff. Die Batteriezellen sind innerhalb des Batteriegehäuses angeordnet. Das Oberteil wird auf dem Unterteil befestigt, um einen im Wesentlichen quaderförmigen Behälter zu bilden.

US6197444B1 zeigt ein Batteriegehäuse, ein Paar Gehäuseelemente umfassend, welche miteinander verbunden sind, um ein Gehäuse für zumindest eine Batterie zu bilden. Jedes Gehäuseelement weist ein Paar nicht paralleler Seitenwände auf. Jede Seitenwand der Gehäuseelemente ist angepasst, um als unterste Bodenwand positioniert zu werden. Ein Paar querverlaufender Stirnwände verbindet die Seitenwände, um eine Öffnung zu definieren, in welcher zumindest ein Abschnitt der Batterie angeordnet ist.

### Zusammenfassung der Erfindung

Es ist eine Aufgabe der Erfindung, ein Batteriesystem mit einem Batteriegehäuse bereitzustellen, wobei das Batteriegehäuse ein optimiertes Volumen aufweist in dem ausreichend Abstand von den Seitenwänden des Batteriegehäuses zu den im Batteriegehäuse untergebrachten Batteriekomponenten gegeben ist, bei zugleich reduzierten Außenabmessungen des Batteriegehäuses.

Die Lösung der Aufgabe erfolgt durch ein Batteriesystem, umfassend ein Gehäuse mit zumindest zwei Batteriegehäuseschalen und zumindest einer Batteriekomponente welche innerhalb des Batteriegehäuses angeordnet ist, wobei die erste Batteriegehäuseschale und/oder die zweite Batteriegehäuseschale eine Bodenfläche, eine erste Seitenwand und eine zweite Seitenwand aufweist, sowie zumindest zwei die erste Seitenwand und die zweite Seitenwand verbindende Verbindungswände, wobei die erste Seitenwand höher als die zweite Seitenwand ist, und wobei die erste Seitenwand gegenüberliegend der zweiten Seitenwand angeordnet ist, so dass eine schräge Teilung des Batteriegehäuses entsteht, wobei die erste Seitenwand zumindest abschnittsweise eine Ausbuchtung aufweist.

Die Ausbuchtung ist dabei so ausgebildet, dass sie im Vergleich zum selben Batteriegehäuse, jedoch ohne Ausbuchtung, eine Vergrößerung des Batteriegehäusevolumens bewirkt.

Die Ausbuchtung erlaubt es, dass das Batteriegehäuse in seinen geometrischen Abmessungen kleiner ausgeführt werden kann, da für im Batteriegehäuse untergebrachte Komponenten, für welche ein größerer Abstand zum Batteriegehäuse gefordert ist, durch die besagte Ausbuchtung ein größerer Abstand zum Batteriegehäuse erreicht wird.

Weiterbildungen der Erfindung sind in den abhängigen Ansprüchen, der Beschreibung sowie den beigefügten Zeichnungen angegeben.

In einer bevorzugten erfinderischen Ausführung des Batteriesystems ist die Ausbuchtung benachbart zu zumindest einer Batteriekomponente angeordnet, und wobei die zumindest eine Batteriekomponente als spannungsführenden Batteriekomponente ausgebildet ist, so dass zwischen der ersten Seitenwand und der zumindest einen spannungsführenden Batteriekomponente ein vorgegebener Mindestabstand besteht.

Der vorgegebene Mindestabstand zwischen dem Batteriegehäuse und der zumindest einen Batteriekomponente, wobei die zumindest eine Batteriekomponente als spannungsführenden Batteriekomponente ausgebildet ist, ist erforderlich, um eine ausreichend große elektrische Luft-/KriechStrecke zwischen der spannungsführenden Batteriekomponente und der ersten Seitenwand der Batteriegehäuseschale zu erreichen, sowie zur Berücksichtigung der Form- und Lagetoleranz der zumindest einen spannungsführenden Batteriekomponente. Durch die Ausbuchtung wird an der ersten Seitenwand ein ausreichender Freiraum zwischen Batteriegehäuseschale und der spannungsführenden Batteriekomponente sichergestellt.

Eine ausreichende Luft-/Kriechstrecke ist erforderlich, um das Batteriegehäuse vor den Auswirkungen von elektrischen Spannungen oder Strömen zu schützen. Je nach Höhe der möglich auftretenden Spannungsdifferenz zwischen den spannungsführenden Batteriekomponenten und dem Batteriegehäuse ist ein entsprechend errechenbarer Mindestabstand einzuhalten, wobei dieser von der Überspannungskategorie (I-IV) abhängt. In weiterer Folge werden dadurch auch Personen die in Kontakt mit dem Batteriegehäuse des Batteriesystems kommen vor möglichen Überspannungen geschützt.

Aufgrund eines ausreichenden Abstands zwischen der Batteriegehäuseschale und der spannungsführenden Batteriekomponente kann auf sonst erforderliche teure Isolationsmaßnahmen der spannungsführenden Batteriekomponenten verzichtet werden.

Spannungsführende Batteriekomponenten können insbesondere Batteriezellen, Zellverbinder, Batteriemodulverbinder, Steckverbindungen und Elektronikeinheiten sein.

Unter Batteriezellen werden Sekundärzellen verstanden. Sekundärzellen können nach einer Entladung wieder aufgeladen werden. Die chemischen Prozesse in der Zelle laufen reversibel ab.

Zellverbinder sind Batteriekomponenten, die positive Pole einer ersten Batteriezelle mit negativen Polen einer weiteren Batteriezelle bzw. negative Pole einer ersten Batteriezelle mit positiven Polen einer weiteren Batteriezelle elektrisch leitend verbinden. Zellverbinder sind bevorzugt aus dem gleichen Werkstoff wie die Zellterminals hergestellt, und in der Regel aus Stahl, Aluminium oder Kupfer.

Batteriemodulverbinder dienen zur elektrisch leitenden Verbindung von Batteriemodulen zu einem Batteriepack. Als Batteriemodul wird eine bauliche Untereinheit eines Batteriesystems bezeichnet, wobei ein Batteriemodul im Wesentlichen eine beliebige Anzahl von Batteriezellen aufweist, und wobei die Batteriezellen elektrisch in Serie und/oder Parallel verschaltet sind. Ein Batteriemodul umfasst mehrere mechanisch und elektrisch miteinander verbundene Batteriezellen und zumeist auch eine Elektronikeinheit und/oder Teile eines Temperiersystems. Ein Batteriesystem umfasst üblicherweise mehrere Batteriemodule.

Elektronikeinheiten können unter anderem Umrichter oder Steuervorrichtungen die zur Steuerung/Regelung der Batteriezellen oder zur Aufnahme und Verarbeitung von Sensorsignalen oder Spannungsabgriffen ausgebildet sind sein.

In einer weiteren bevorzugten Ausführungsform des Batteriesystems ist die Ausbuchtung benachbart zu zumindest einer Batteriekomponente angeordnet, und wobei die zumindest eine Batteriekomponente als nicht spannungsführende Batteriekomponente ausgebildet ist, so dass zwischen der ersten Seitenwand und der zumindest einen nicht spannungsführenden Batteriekomponente ein vorgegebener Mindestabstand besteht.

Die Ausbuchtung erlaubt eine bessere Zugänglichkeit zu den nicht spannungsführenden Batteriekomponenten bzw. die Schaffung eines größeren Freiraums zur Vermeidung von Beschädigung dieser Batteriekomponentenwie z.B. den Kühlkomponenten oder Hilfsrahmen für Batteriemodule. Kühlkomponenten dienen im Wesentlichen zum Temperieren der Batteriezellen und sollen einerseits ein Überschreiten und andererseits ein Unterschreiten der für die optimale Funktionsbereitschaft der Batteriezellen vorgeschriebenen Temperaturbereichs verhindern.

Hilfsrahmen dienen im Wesentlichen zur Aufnahme und Befestigung von Batteriemodulen an den Hilfsrahmen. Der Hilfsrahmen wird in der Batteriegehäuseschale untergebracht und darin beispielsweise mittels Verschrauben dauerhaft mit der Batteriegehäuseschale verbunden.

Die Ausbuchtung ermöglicht daher eine einfachere und schnellere Möglichkeit zur Montage von z.B. Batteriemodulen in die Batteriegehäuseschale, sowie eine Wartung oder Reparatur defekter Batteriekomponenten.

Die Ausbuchtung kann sich erfindungsgemäß über die ganze Breite der ersten Seitenwand erstrecken oder auch nur bereichsweise in der ersten Seitenwand ausgebildet sein. Unter der Breite einer Seitenwand wird dabei die Abmessung der Seitenwand von einer begrenzenden Verbindungswand bis zur gegenüberliegenden begrenzenden Verbindungswand verstanden.

Vorzugsweise bilden die erste Seitenwand und die Bodenfläche der ersten Batteriegehäuseschale einen im Wesentlichen rechten Winkel.

Gemäß einer weiteren Ausgestaltung der Erfindung bilden die zweite Seitenwand und die Bodenfläche einen Winkel größer als 90°. Besonders bevorzugt ist es, wenn die zweite Seitenwand und die Bodenfläche einen Winkel zwischen 95° und 105° einschließen.

Die Batteriegehäuseschale des Batteriegehäuses weist eine erste Seitenwand auf, welche im Wesentlichen im rechten Winkel zur Bodenfläche ausgebildet ist. Die zweite Seitenwand ist der ersten Seitenwand gegenüberliegend angeordnet und weist einen Winkel zur Bodenfläche der Batteriegehäuseschale auf welcher für ein Entformen eines zur Herstellung der Batteriegehäuseschale erforderlichen Werkzeugs erforderlich ist und weist bevorzugt einen Winkel zwischen 95° und 105° zur Bodenfläche auf. Da die zweite Seitenwand im Vergleich zur ersten Seitenwand niedriger ausgebildet ist, wird die Außenabmessung der Batteriegehäuseschale nicht wesentlich beeinflusst, wodurch das Batteriegehäuse klein und kompakt hergestellt werden kann. Verglichen mit einer Batteriegehäuseschale bei der auch die erste Seitenwand eine Entformungsschräge aufweist, hat die erfindungsgemäße Batteriegehäuseschale bei gleichen Innenvolumen wesentlich kleinere Außenabmessungen. Die erste Seitenwand und die zweite Seitenwand sind durch zumindest zwei Verbindungswände miteinander verbunden.

Da die zweite Seitenwand niedriger als die erste Seitenwand ausgebildet ist, kann die Entformung des Werkzeugs aus der Ausbuchtung in der ersten Seitenwand, ebenfalls einfacher durchgeführt werden, da das Werkzeug nach Erreichen der Höhe der zweiten Seitenwand in entgegengesetzter Richtung der Ausbuchtung der ersten Seitenwand entformt werden kann. Das Batteriegehäuse wird mit der Karosserie eines Kraftfahrzeugs mittels Hilfselemente wie Bügel, Halter oder Rahmen und dergleichen fest verbunden. Die zumindest eine Ausbuchtung in der ersten Seitenwand der Batteriegehäuseschale ist dabei so ausgebildet, dass die Hilfselemente im senkrechten Bereich der ersten Seitenwand, zur Bodenfläche gemessen, anliegen.

Gemäß einer Ausführungsform der Erfindung sind die erste Batteriegehäuseschale und/oder die zweite Batteriegehäuseschale als Gussteil ausgeführt.

Dabei können dünnwandige komplexe Bauteilgeometrien bei hoher Maßhaltigkeit hergestellt werden die gleichzeitig sehr gute Festigkeitswerte erreichen.

Gemäß einer weiteren Ausführungsform ist die erste Batteriegehäuseschale und/oder die zweite Batteriegehäuseschale ein Tiefziehteil.

Tiefziehteile haben den Vorteil, dass Bauteile mit sehr geringer Wandstärke hergestellt werden können, wodurch eine Gewichtseinsparung erreicht wird.

Die Ausbuchtung in der ersten Seitenwand ist so ausgebildet, dass eine Herstellung der Batteriegehäuseschale einfach möglich ist. Die Geometrie der Ausbuchtung ist so ausgebildet, dass diese beispielsweise keine Hinterschneidungen in Bezug auf die Entformungsrichtung aufweist, wobei die Entformungsrichtung jene Richtung ist, in welche das Werkzeug, bzw. in entgegengesetzter Richtung das Werkstück, nach der Herstellung der Batteriegehäuseschale entfernt wird. Die Entformungsrichtung ist dabei im Wesentlichen senkrecht zur Teilungsebene der Batteriegehäuseschale. Die Teilungsebene ist jene Ebene die die Schnittstelle der beiden Batteriegehäuseschalen definiert und ist hier im Wesentlichen der umlaufende Flansch. Da die Batteriegehäuseschale keine Hinterschneidungen im Bereich der Ausbuchtung aufweist, kann das Werkzeug kostengünstig ohne beispielsweise sonst erforderliche Schieber hergestellt werden.

In einer weiteren erfindungsgemäßen Ausführungsform ist zumindest eine Gehäuseschale aus einem metallischen Werkstoff hergestellt.

Ein metallischer Werkstoff kann beispielsweise dann erforderlich sein, wenn das Batteriegehäuse große Kräfte aufnehmen muss.

In einer weiteren erfindungsgemäßen Ausführungsform ist zumindest eine Batteriegehäuseschale aus Kunststoff hergestellt. Kunststoff hat den Vorteil dass es leichter als Metall ist und auch kostengünstiger bei der Herstellung der Batteriegehäuseschalen ist.

Es ist denkbar, dass dabei für die erste Batteriegehäuseschale und die zweite Batteriegehäuseschale unterschiedliche Werkstoffe verwendet werden.

Erfindungsgemäß sind die erste Batteriegehäuseschale und die zweite Batteriegehäuseschale verbindbar. Die Geometrie der beiden Gehäuseschalen wird dabei entsprechend der Verbindungstechnik angepasst. Es ist jede dem Fachmann bekannte Art und Weise zur geeigneten Verbindung zweier Batteriegehäuseschalen denkbar, wie beispielsweise Verschrauben, Schweißen, Löten oder Kleben, wobei an den Schnittstellen der beiden Batteriegehäuseschalen Dichtungen vorgesehen werden können, und die Batteriegehäuseschalen werden entsprechend der Anforderungen der unterschiedlichen Verbindungstechniken angepasst.

Die beiden Batteriegehäuseschalen weisen in einer weiteren erfinderischen Ausführungsform einen umlaufenden Flansch auf, welcher zu Verbindung beider Gehäuseschalen entsprechend ausgebildet ist.

Die Flansche der ersten Batteriegehäuseschale und der zweiten Batteriegehäuseschale des Batteriesystems sind dem Fügeverfahren entsprechend ausgebildet und weisen in einer erfinderischen Ausbildung einen zum Fügen erforderlichen entsprechenden Abstand zur Ausbuchtung auf, und sind weiter so ausgebildet, dass die Flansche an der der Ausbuchtung gegenüberliegenden Seite für Füge- bzw. Montagewerkzeuge zugänglich sind.

Vorzugsweise dienen die Batteriegehäuseschalen zur Aufnahme zumindest einer Batteriekomponente oder eines Batteriemoduls, wobei das Batteriemodul zumindest eine Batteriezelle aufweist, wobei die Batteriezelle bevorzugt an einem Zellhalter oder alternativ an einem Hilfsrahmen befestigt ist.

Das hat den Vorteil, dass die Batteriezellen fertig montiert in der ersten Batteriegehäuseschale untergebracht sind, und eine Montage aller weiteren Batteriekomponenten des Batteriesystems, wie Elektronikkomponenten, Kühlkomponenten, aber auch die Modulverbindungen vorab fertiggestellt werden können, und die zweite Batteriegehäuseschale zur Komplettierung nur noch mit der ersten Batteriegehäuseschale verbunden werden muss.

Die Erfindung ist nicht auf den Automobilbau eingeschränkt, sondern kann auch im Non-Automotive Bereich, beispielsweise im Schiffsbau oder Schienenverkehr, aber auch für stationäre Anwendungen wie z.B. im Anlagenbau angewendet werden.

### Kurzbeschreibung der Zeichnungen

Die Erfindung wird im Folgenden beispielhaft unter Bezugnahme auf die Zeichnungen beschrieben.
- Fig. 1: ist eine Seitenansicht einer erfindungsgemäßen Batteriegehäuseschale (Darstellung oben), sowie eine Seitenansicht einer Batteriegehäuseschale im Stand der Technik bekannt (Darstellung unten).
- Fig. 2: ist eine Seitenansicht eines erfindungsgemäßen Batteriesystems.

### Detaillierte Beschreibung der Erfindung

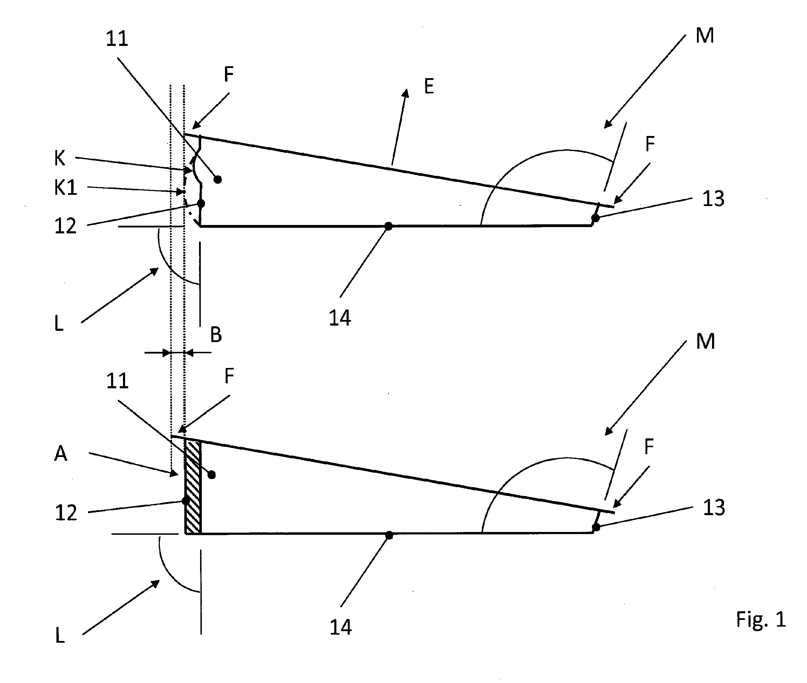

In Fig. 1 ist in der oberen Darstellung eine erfindungsgemäße Gehäuseschale 11 dargestellt. Die Batteriegehäuseschale 11 weist eine erste Seitenwand 12 auf welche im Wesentlichen rechtwinklig zur Bodenfläche 14 ausgebildet ist. Die erste Seitenwand 11 weist eine Ausbuchtung K auf, welche so ausgebildet ist, dass das Volumen der Batteriegehäuseschale 11 vergrößert wird. Die erste Seitenwand 12 ist mit der zweiten Seitenwand 13 durch zumindest eine Verbindungswand verbunden. Da die erste Seitenwand 12 höher als die zweite Seitenwand 13 ausgebildet ist, entsteht eine schräge Teilung des Batteriegehäuses. Die zweite Seitenwand 13 bildet mit der Bodenfläche 14 eine Schräge M, welche einen Winkel, bevorzugt zwischen 95° und 105°, einschließt und für die Entformung eines Werkzeugs zur Herstellung der Batteriegehäuseschale 11 in Entformungsrichtung E aufweist. Da die zweite Seitenwand 13 eine wesentlich geringere Höhe als die erste Seitenwand 12 aufweist, wirkt sich die geometrische Änderung in Bezug auf die Abmessungen des Batteriesystems 1 nicht sonderlich aus, wodurch gegenüber dem Stand der Technik ein wesentlich geringer Bauraumbedarf gegeben ist. Die Seitenwände der Batteriegehäuseschale 11 weisen einen umlaufenden Flansch F auf, wobei der Flansch F die Seitenwände soweit überragt, wie es ein Fügeverfahren zur Verbindung der ersten Gehäuseschale 11 mit der zweiten Batteriegehäuseschale 21 erfordert.

Die Entformungsrichtung E ist im Wesentlichen senkrecht zur Teilungsebene und zeigt die Richtung an, in welche das Werkzeug nach der Herstellung aus der Batteriegehäuseschale entfernt wird.

Die untere Ansicht zeigt eine Gehäuseschale 11, wobei die Gehäuseschale 11 einen zusätzlichen Bauraum A, wie durch die schraffierte Fläche dargestellt, benötigen würde. Dadurch würde die untere Gehäuseschale 11 gegenüber der Batteriegehäuseschale 11 der oberen Ansicht um den Betrag B größeren Bauraumbedarf benötigen.

Eine weitere Ausbuchtung K1 wird durch die punkt-strichlierte Linie dargestellt, wobei die Ausbuchtung K1 nicht über den Flansch F, in Draufsicht gesehen, überragen würde.

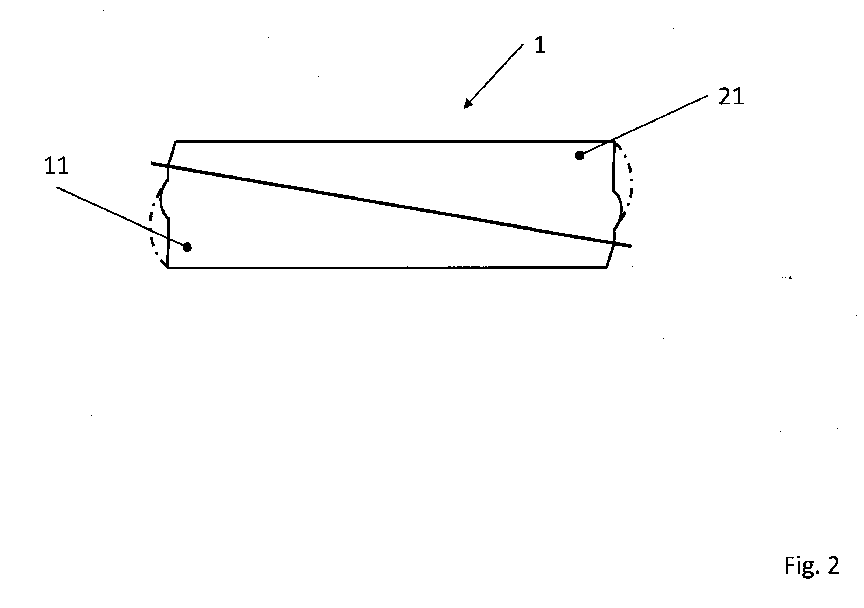

Fig. 2 zeigt eine Seitenansicht des Batteriesystems, wobei die erste Batteriegehäuseschale 11 mit der zweiten Batteriegehäuseschale 21 verbunden dargestellt ist. Die zweite Batteriegehäuseschale 21 kann dabei die gleiche Geometrie wie die erste Batteriegehäuseschale 11 aufweisen, es ist jedoch jede beliebige erforderliche andere Geometrie denkbar.

### Bezugszeichenliste

- 1: Batteriesystem
- 11: erste Batteriegehäuseschale
- 12: erste Seitenwand
- 13: zweite Seitenwand
- 14: Bodenfläche
- 21: zweite Batteriegehäuseschale

- A: zusätzlicher Bauraum
- B: Abstand
- E: Entformungsrichtung
- F: Flansch
- K: Ausbuchtung
- K1: Ausbuchtung
- L: rechter Winkel
- M: Schräge

## Patentansprüche

1. Batteriesystem (1), umfassend ein Batteriegehäuse mit zumindest zwei Batteriegehäuseschalen und zumindest eine Batteriekomponente welche innerhalb des Batteriegehäuses angeordnet ist, wobei die erste Batteriegehäuseschale (11) und/ oder die zweite Batteriegehäuseschale (21) eine Bodenfläche (14), eine erste Seitenwand (12) und eine zweite Seitenwand (13) aufweist, sowie zumindest zwei die erste Seitenwand (12) und die zweite Seitenwand (13) verbindende Verbindungswände, wobei die erste Seitenwand (12) höher als die zweite Seitenwand (13) ist, und wobei die erste Seitenwand (12) gegenüberliegend der zweiten Seitenwand (13) angeordnet ist, so dass eine schräge Teilung des Batteriegehäuses entsteht,
**dadurch gekennzeichnet, dass** die erste Seitenwand (12) zumindest abschnittsweise eine Ausbuchtung (K) aufweist.

2. Batteriesystem (1) nach Anspruch 1,
**dadurch gekennzeichnet, dass** die Ausbuchtung (K) benachbart zu zumindest einer Batteriekomponente angeordnet ist, und wobei die zumindest eine Batteriekomponente als spannungsführenden Batteriekomponente ausgebildet ist, so dass zwischen der ersten Seitenwand (12) und der zumindest einen spannungsführende Batteriekomponente ein vorgegebener Mindestabstand besteht.

3. Batteriesystem (1) nach zumindest einem der vorhergehenden Ansprüche,
**dadurch gekennzeichnet, dass** die Ausbuchtung (K) benachbart zu zumindest einer Batteriekomponente angeordnet ist, und wobei die zumindest eine Batteriekomponente als nicht spannungsführende Batteriekomponente ausgebildet ist, so dass zwischen der ersten Seitenwand (12) und der zumindest einen nicht spannungsführenden Batteriekomponente ein vorgegebener Mindestabstand besteht.

4. Batteriesystem (1) nach zumindest einem der vorhergehenden Ansprüche,
**dadurch gekennzeichnet, dass** sich die Ausbuchtung (K) über die ganze Breite der ersten Seitenwand (12) erstreckt.

5. Batteriesystem (1) nach zumindest einem der vorhergehenden Ansprüche,
**dadurch gekennzeichnet, dass** die erste Seitenwand (12) und die Bodenfläche (14) der ersten Batteriegehäuseschale (11) einen im Wesentlichen rechten Winkel (L) bilden.

6. Batteriesystem (1) nach zumindest einem der vorhergehenden Ansprüche,
**dadurch gekennzeichnet, dass** die zweite Seitenwand (12) eine Schräge (M) zur Bodenfläche (14) aufweist, wobei die Schräge (M) vorzugsweise einen Winkel zwischen der zweiten Seitenwand (13) und der Bodenfläche (14) von 95° und 105° aufweist.

7. Batteriesystem (1) nach zumindest einem der vorhergehenden Ansprüche,
**dadurch gekennzeichnet, dass** die erste Batteriegehäuseschale (11) und/ oder die zweite Batteriegehäuseschale (21) im Gussverfahren hergestellt sind.

8. Batteriesystem (1) nach zumindest einem der vorhergehenden Ansprüche,
**dadurch gekennzeichnet, dass** die erste Batteriegehäuseschale (11) und/ oder die zweite Batteriegehäuseschale (21) im Tiefziehverfahren hergestellt sind.

9. Batteriesystem (1) nach zumindest einem der vorhergehenden Ansprüche,
**dadurch gekennzeichnet, dass** die Ausbuchtung (K) keinen Hinterschnitt in Entformungsrichtung (E) aufweist.

10. Batteriesystem (1) nach zumindest einem der vorhergehenden Ansprüche,
**dadurch gekennzeichnet, dass** zumindest die erste Batteriegehäuseschale (11) und/ oder die zweite Batteriegehäuseschale (21) aus einem metallischen Werkstoff hergestellt ist.

11. Batteriesystem (1) nach zumindest einem der vorhergehenden Ansprüche,
**dadurch gekennzeichnet, dass** zumindest die erste Batteriegehäuseschale (11) und/ oder die zweite Batteriegehäuseschale (21) aus Kunststoff hergestellt ist.

12. Batteriesystem (1) nach zumindest einem der vorhergehenden Ansprüche,
**dadurch gekennzeichnet, dass** die erste Batteriegehäuseschale (11) und die zweite Batteriegehäuseschale (21) miteinander verbindbar sind.

13. Batteriesystem (1) nach zumindest einem der vorhergehenden Ansprüche,
**dadurch gekennzeichnet, dass** die erste Batteriegehäuseschale (11) und die zweite Batteriegehäuseschale (21) jeweils einen umlaufenden Flansch (F) aufweist.

14. Batteriesystem (1) Anspruch 13,
**dadurch gekennzeichnet, dass** die erste Batteriegehäuseschale (11) und/ oder die zweite Batteriegehäuseschale (21) des Batteriesystems (1) so ausgebildet sind, dass der Flansch (F) an der der Ausbuchtung (K) gegenüberliegenden Seite für Füge- oder Montagewerkzeuge zugänglich ist.

15. Batteriesystem (1) nach zumindest einem der vorhergehenden Ansprüche,
**dadurch gekennzeichnet, dass** die erste Batteriegehäuseschale (11) und die zweite Batteriegehäuseschale (21) zur Aufnahme von zumindest einer Batteriekomponente ausgebildet sind.

## Claims

1. Battery system (1) comprising a battery housing having at least two battery housing shells and at least one battery component which is arranged within the battery housing, wherein the first battery housing shell (11) and/or the second battery housing shell (21) has a bottom surface (14), a first side wall (12) and a second side wall (13), and also at least two connecting walls which connect the first side wall (12) and the second side wall (13), wherein the first side wall (12) is higher than the second side wall (13), and wherein the first side wall (12) is arranged opposite the second side wall (13), so that an oblique pitch of the battery housing is produced, **characterized in that** the first side wall (12) has a protrusion (K) at least in sections.

2. Battery system (1) according to Claim 1, **characterized in that** the protrusion (K) is arranged adjacent to at least one battery component, and wherein the at least one battery component is designed as a voltage-carrying battery component, so that there is a prespecified minimum distance between the first side wall (12) and the at least one voltage-carrying battery component.

3. Battery system (1) according to at least one of the preceding claims, **characterized in that** the protrusion (K) is arranged adjacent to at least one battery component, and wherein the at least one battery component is in the form of a non-voltage-carrying battery component, so that there is a prespecified minimum distance between the first side wall (12) and the at least one non-voltage-carrying battery component.

4. Battery system (1) according to at least one of the preceding claims, **characterized in that** the protrusion (K) extends over the entire width of the first side wall (12).

5. Battery system (1) according to at least one of the preceding claims, **characterized in that** the first side wall (12) and the bottom surface (14) of the first battery housing shell (11) form a substantially right angle (L).

6. Battery system (1) according to at least one of the preceding claims, **characterized in that** the second side wall (12) has a slope (M) in relation to the bottom surface (14), wherein the slope (M) preferably has an angle between the second side wall (13) and the bottom surface (14) of 95° and 105°.

7. Battery system (1) according to at least one of the preceding claims, **characterized in that** the first battery housing shell (11) and/or the second battery housing shell (21) are produced in a casting process.

8. Battery system (1) according to at least one of the preceding claims, **characterized in that** the first battery housing shell (11) and/or the second battery housing shell (21) are produced in a deep-drawing or thermoforming process.

9. Battery system (1) according to at least one of the preceding claims, **characterized in that** the protrusion (K) does not have an undercut in the demoulding direction (E).

10. Battery system (1) according to at least one of the preceding claims, **characterized in that** at least the first battery housing shell (11) and/or the second battery housing shell (21) are/is produced from a metal material.

11. Battery system (1) according to at least one of the preceding claims, **characterized in that** at least the first battery housing shell (11) and/or the second battery housing shell (21) are/is produced from plastic.

12. Battery system (1) according to at least one of the preceding claims, **characterized in that** the first battery housing shell (11) and the second battery housing shell (21) can be connected to one another.

13. Battery system (1) according to at least one of the preceding claims, **characterized in that** the first battery housing shell (11) and the second battery housing shell (21) each have a circumferential flange (F).

14. Battery system (1) according to Claim 13, **characterized in that** the first battery housing shell (11) and/or the second battery housing shell (21) of the battery system (1) are designed such that the flange (F) is accessible to joining or assembly tools from that side which is situated opposite the protrusion (K).

15. Battery system (1) according to at least one of the preceding claims, **characterized in that** the first battery housing shell (11) and the second battery housing shell (21) are designed to accommodate at least one battery component.

## Revendications

1. Système (1) de batterie comprenant un boîtier de batterie doté d'au moins deux coquilles de boîtier de batterie et au moins un composant de batterie disposé à l'intérieur du boîtier de batterie,
la première coquille (11) de boîtier de batterie et/ou la deuxième coquille (21) de boîtier de batterie présentant une surface de fond (14), une première paroi latérale (12) et une deuxième paroi latérale (13), au moins deux parois de liaison reliant la première paroi latérale (12) et la deuxième paroi latérale (13),
la première paroi latérale (12) étant plus haute que la deuxième paroi latérale (13),
la première paroi latérale (12) étant disposée face à la deuxième paroi latérale (13) de telle sorte que l'on obtient une division oblique du boîtier de batterie,
**caractérisé en ce que**
au moins certaines parties de la première paroi latérale (12) présentent une découpe (K).

2. Système (1) de batterie selon la revendication 1, **caractérisé en ce que** la découpe (K) est disposée au voisinage d'au moins un composant de batterie et **en ce que** le ou les composants de batterie sont configurés comme composants de batterie conduisant une tension, de telle sorte qu'une distance minimale prédéterminée existe entre la première paroi latérale (12) et le ou les composants de batterie conduisant la tension.

3. Système (1) de batterie selon au moins l'une des revendications précédentes, **caractérisé en ce que** la découpe (K) est disposée au voisinage d'au moins un composant de batterie, le ou les composants de batterie étant configurés comme composants de batterie ne conduisant pas de tension, de telle sorte qu'une distance minimale prédéterminée existe entre la première paroi latérale (12) et le ou les composants de batterie ne conduisant pas de tension.

4. Système (1) de batterie selon au moins l'une des revendications précédentes, **caractérisé en ce que** la découpe (K) s'étend sur toute la largeur de la première paroi latérale (12).

5. Système (1) de batterie selon au moins l'une des revendications précédentes, **caractérisé en ce que** la première paroi latérale (12) et la surface de fond (14) de la première coquille (11) de boîtier de batterie forment un angle essentiellement droit (L).

6. Système (1) de batterie selon au moins l'une des revendications précédentes, **caractérisé en ce que** la deuxième paroi latérale (12) présente une obliquité (M) par rapport à la surface de fond (14), l'obliquité (M) présentant de préférence un angle entre la deuxième paroi latérale (13) et la surface de fond (14) compris entre 95° et 105°.

7. Système (1) de batterie selon au moins l'une des revendications précédentes, **caractérisé en ce que** la première coquille (11) de boîtier de batterie et/ou la deuxième coquille (21) de boîtier de batterie sont réalisées par une opération d'injection.

8. Système (1) de batterie selon au moins l'une des revendications précédentes, **caractérisé en ce que** la première coquille (11) de boîtier de batterie et/ou la deuxième coquille (21) de boîtier de batterie sont réalisées par une opération d'emboutissage profond.

9. Système (1) de batterie selon au moins l'une des revendications précédentes, **caractérisé en ce que** la découpe (K) ne présente pas de contre-dépouille dans la direction de démoulage (E).

10. Système (1) de batterie selon au moins l'une des revendications précédentes, **caractérisé en ce qu'**au moins la première coquille (11) de boîtier de batterie et/ou la deuxième coquille (21) de boîtier de batterie sont réalisées en un matériau métallique.

11. Système (1) de batterie selon au moins l'une des revendications précédentes, **caractérisé en ce qu'**au moins la première coquille (11) de boîtier de batterie et/ou la deuxième coquille (21) de boîtier de batterie sont réalisées en matière synthétique.

12. Système (1) de batterie selon au moins l'une des revendications précédentes, **caractérisé en ce que** la première coquille (11) de boîtier de batterie et la deuxième coquille (21) de boîtier de batterie peuvent être reliées l'une à l'autre.

13. Système (1) de batterie selon au moins l'une des revendications précédentes, **caractérisé en ce que** la première coquille (11) de boîtier de batterie et la deuxième coquille (21) de boîtier de batterie présentent chacune une bride périphérique (F).

14. Système (1) de batterie selon la revendication 13, **caractérisé en ce que** la première coquille (11) de boîtier de batterie et/ou la deuxième coquille (21) de boîtier de batterie du système (1) de batterie sont configurées de telle sorte que la bride (F) soit accessible à des outils de jonction ou de montage sur le côté opposé à la découpe (K).

15. Système (1) de batterie selon au moins l'une des revendications précédentes, **caractérisé en ce que** la première coquille (11) de boîtier de batterie et la deuxième coquille (21) de boîtier de batterie sont configurées pour reprendre au moins un composant de batterie.
